# DEMANDE DE BREVET EUROPEEN

(11) **EP 4 470 651 A1**
(43) Date de publication de la demande: **04.12.2024**
(21) Numéro de dépôt: 24177116.1
(22) Date de dépôt: 21.05.2024
(51) Int. Cl.: B01D 46/00, B01D 46/10, B01D 46/62, B01D 46/12, B01D 46/52, B01D 46/60

(54) **CARTOUCHE POUR FILTRE A AIR ET PROCEDE D ASSEMBLAGE D'UNE CARTOUCHE INCLUANT DEUX ELEMENTS FILTRANTS**

(30) Priorité: 31.05.2023 FR 2305405
(71) Demandeur: Sogefi Filtration, 78280 Guyancourt (FR)
(72) Inventeur: LE MOUELLIC, Bruno, 14500 VIRE (FR); LE BLOA, Laurent, 14760 BRETTEVILLE-SUR-ODON (FR)
(74) Mandataire: Plasseraud IP

(57) **Abrégé**

La cartouche (CF) pour filtre à air inclut un cadre de support (7) permettant de fixer deux éléments filtrants (11, 12) dans un état superposé, de part et d'autre d'un rebord intérieur du cadre, par utilisation d'un même matériau de collage pouvant être versé en une étape de dépôt réalisée d'un seul côté du rebord, dont une portion de paroi annulaire ajourée réalise la séparation entre une première zone encollée (ZC1) où se fixe le premier élément filtrant (11) et une deuxième zone encollée (ZC2) où se fixe le deuxième élément filtrant (12). Le matériau de collage s'écoule de façon fluide de l'une à l'autre des zones grâce aux trous du rebord. Une interface (30) de liaison est obtenue entre les éléments filtrants, qui combine la portion de paroi ajourée et la couche solidifiée du matériau de collage dans laquelle sont noyées des extrémités respectives de ces éléments.

## Description

### Domaine technique

L'invention concerne le domaine des filtres à air, notamment les filtres destinés à purifier l'air d'alimentation de moteurs à combustion interne ou d'un générateur à pile à combustible, par exemple pour une utilisation dans un véhicule automobile. La présente divulgation se rapporte plus particulièrement à une cartouche filtrante disposant de deux éléments filtrants et à un procédé d'assemblage d'une telle cartouche filtrante. Elle concerne aussi un filtre à air comportant un boîtier avec deux éléments filtrants qui peuvent être superposés au sein d'une cartouche disposée intérieurement dans le boîtier.

### Technique antérieure

Dans des filtres à air pour véhicule motorisé, il est habituel de loger un élément filtrant à l'intérieur d'un boîtier réutilisable. L'élément filtrant peut inclure plusieurs couches de filtration, par exemple une couche filtrante pour séparer des poussières (dont des particules visibles à l'oeil nu) puis une ou plusieurs couches dédiées à la séparation de particules fines et/ou de contaminants chimiques (dont le contaminant SO₂ ou autre contaminant courant, par exemple dans le cas d'une filtration pour une pile à combustible). On connaît par le document WO 2015/092681 un filtre à air pour moteur à combustion interne, intégrant dans un élément filtrant deux couches de papier qui sont plissées et séparées entre elles par des éléments écarteurs, tout en en étant reliées à un cadre commun formant une périphérie extérieure de l'élément filtrant.

Le document US 2017/0239604 prévoit par exemple de cumuler un certain nombre de couches de filtration dans une partie filtrante. Pour permettre l'utilisation d'une cartouche filtrante dans un boîtier avec une facilité de montage et une capacité filtrante optimisée et durable, le recours à du média plissé peut être requis.
Lorsqu'il faut associer le filtre à air à une pile à combustible ou zone de génération sensible, il est généralement requis plusieurs couches filtrantes pour protéger cette pile/zone des polluants venant de l'extérieur.

En tout état de cause, il existe encore une marge de progrès pour faciliter le montage d'une cartouche qui peut présenter une complexité croissante pour permettre une bonne filtration d'air, notamment lorsqu'il s'agit de cartouches rassemblant au moins deux éléments filtrants.

### Résumé

Afin d'améliorer la situation, il est proposé une cartouche de filtration d'air, apte à coopérer dans un boîtier d'un filtre à air (cartouche pour un filtre à air disposant d'un boîtier) incluant une entrée pour l'admission d'un flux d'air brut et une sortie pour l'évacuation d'air purifié, la cartouche comprenant :
- un premier élément filtrant ;
- un deuxième élément filtrant ;
- un cadre de support commun pour supporter le premier élément filtrant et le deuxième élément filtrant en les rendant solidaires l'un de l'autre, ce cadre s'étendant de façon annulaire autour d'un axe longitudinal en présentant une face intérieure depuis laquelle est formé un rebord recouvert d'un matériau de collage, de sorte que le rebord inclut une première surface de réception d'une couche de collage à base du matériau pour le premier élément filtrant et une deuxième surface de réception d'une couche de collage du même matériau pour le deuxième élément filtrant, la deuxième surface étant orientée à l'opposé de la première surface,
sachant que la première surface de réception et la deuxième de surface de réception sont prévues, dans le rebord, sur une portion annulaire de paroi ajourée permettant une migration de l'une vers l'autre des surfaces de réception, du matériau de collage fluide (avant solidification ou stabilisation, par exemple alors que le matériau de collage vient d'être chauffé ou se trouve encore dans un état suffisamment chaud), sous l'effet de la gravité, en remplissant des trous distribués dans la portion annulaire de paroi ajourée.

Grâce à ces dispositions, l'assemblage de la cartouche peut être facilité, par exemple en supprimant une étape de versement de colle (étape de coulage de colle simple). Une configuration superposée des éléments filtrants est obtenue de façon efficace avec une étanchéité à l'air dans la zone de transition entre les deux éléments qui peuvent être conçus séparément. Une conception préalable séparée de ces deux éléments filtrants peut présenter un intérêt en termes de logistique et/ou pour rendre la filtration permise par un élément plus spécifique, en fonction des besoins.
La solidarisation au cadre peut permettre de réaliser une configuration superposée, notamment de sorte que le deuxième élément filtrant soit superposé au premier élément filtrant pour permettre de former, dans le deuxième élément filtrant, au moins une couche de filtration intermédiaire entre une face de sortie du premier élément filtrant et la sortie du boîtier dans un état monté de la cartouche.

Le cadre peut être pourvu de trous pour l'écoulement fluide du matériau uniquement dans la portion de paroi annulaire qui est par exemple entièrement entourée par une paroi latérale (du cadre) imperméable à l'air.
Tout ou partie des trous peuvent consister en des fentes.

Dans des options de réalisation, la cartouche peut présenter une ou plusieurs des particularités suivantes :
- le premier élément filtrant présente un membre périphérique annulaire de support et un premier média de filtration qui est relié au membre périphérique, de préférence en étant fixé à une face intérieure du membre périphérique.
- le deuxième élément filtrant présente une ceinture et un deuxième média de filtration qui est relié à la ceinture, de préférence en étant fixé à une face intérieure de la ceinture ;
- le membre périphérique est noyé dans une première sous-couche du matériau longeant la première surface ;
- la ceinture est noyée dans une deuxième sous-couche du matériau longeant la deuxième surface.
- le remplissage des trous par le matériau permet de constituer une sous-couche intermédiaire discontinue reliant directement la première sous-couche à la deuxième sous-couche.
- la ceinture et le membre périphérique peuvent présenter une même forme et de mêmes dimension, à l'éventuelle exception d'une différence suivant une hauteur (mesurée parallèlement à l'axe longitudinal du cadre).
- la première sous-couche peut remplir la cavité inférieure, tandis que la deuxième sous-couche peut remplir la cavité supérieure.
- lorsque la cartouche occupe une chambre de filtration, dans le boîtier, un espace intercalaire entre les deux éléments filtrants, interne à la cartouche, est séparé de la zone d'amont de filtration (zone extérieure à la cartouche) par le premier élément filtrant et séparé de la zone d'aval de filtration (zone extérieure à la cartouche) par le deuxième élément filtrant.
- le rebord s'étend en saillie radialement vers l'intérieur et inclut un profil à section en T, de manière à délimiter, avec la face intérieure du cadre, une cavité inférieure et une cavité supérieure.
- le matériau de collage peut remplir la cavité supérieure et la cavité inférieure par un écoulement réalisé depuis un seul côté du cadre, par exemple près de/le long d'une circonférence intérieure du cadre.
- le matériau de collage présente une formule adhésive thermofusible, éventuellement sans eau ou solvant.
- le matériau de collage est une colle polyuréthane bi-composant ou une colle epoxy bi-composant, présentant une fluidité provisoire (liée par exemple à l'action d'un durcisseur associé à la résine).
- les trous sont réalisés sous forme de perforations oblongues.
- le cadre présente un relief externe circonférentiel, de préférence en saillie radialement sur l'extérieur du cadre.
- la cartouche incluant un joint d'étanchéité annulaire qui comprend une première portion de recouvrement du relief par le dessous, ainsi qu'une deuxième portion de recouvrement du relief par le dessus.
- le relief externe peut présenter un premier côté situé sensiblement au même niveau que le rebord intérieur.

Dans des formes de réalisation, la cartouche filtrante porte un joint périphérique, en pouvant inclure l'une au moins des particularités suivantes :
- la cartouche est reçue de manière amovible dans le composant de boîtier, par exemple en utilisant un joint comme partie de contact avec un support circonférentiel prévu intérieurement dans le composant de boîtier.
- le joint inclut une section transversale généralement en U.
- le joint dispose de deux lèvres d'étanchéité, par exemple opposées l'une à l'autre.
- une première lèvre annulaire du joint se raccorde par le dessous à la première portion de recouvrement, en faisant saillie vers le bas et vers l'extérieur jusqu'à un bord libre de la première lèvre.
- une deuxième lèvre annulaire du joint se raccorde par le dessus à la deuxième portion de recouvrement, en faisant saillie vers le haut et vers l'extérieur jusqu'à un bord libre de la deuxième lèvre.

Dans des réalisations, la cartouche présente une ou plusieurs des particularités suivantes :
- la cartouche inclut une seule pièce constituant le cadre de support, munie d'un logement annulaire d'encollage prévu dans le rebord intérieur, pour l'assemblage des éléments filtrants, cette pièce pouvant aussi former une circonférence extérieure de la cartouche filtrante.
- le cadre peut présenter une paroi latérale à au moins quatre côtés et un rebord intérieur annulaire formant un support par le dessous du deuxième élément filtrant qui peut optionnellement s'étendre dans un creux du couvercle.

Selon un autre aspect il est proposé un filtre à air pourvu d'une cartouche filtrante telle que susmentionnée, cette cartouche étant logée dans un boîtier de délimitation d'une chambre de filtration, Disposant d'un couvercle pour rendre accessible cette chambre de filtration en vue de permettre un remplacement de la cartouche filtrante.
Le filtre à air comprend ainsi une partie filtrante, un boîtier délimitant une chambre de filtration entre un composant du boîtier et un couvercle, avec la partie filtrante qui inclut ladite cartouche filtrante avec une aptitude à se monter de manière amovible dans la chambre de filtration, en particulier en reposant par le dessus sur une zone de siège formée par bord intérieur du composant qui inclut un fond du boîtier.

Dans un tel filtre, le boîtier présentant un couvercle pour fermer une ouverture du composant par laquelle au moins le premier élément filtrant de la cartouche filtrante est placé dans ledit composant, en regard du fond. En complément, le composant de boîtier peut inclure typiquement l'entrée pour l'admission de flux d'air brut, la sortie pour l'évacuation d'air purifié étant prévue dans le couvercle, de façon à délimiter dans la chambre de filtration une zone en aval, entre le deuxième élément filtrant superposé au premier élément filtrant et un dessus du couvercle situé à l'opposé du fond.

Selon une option, le couvercle est articulé sur le composant par une liaison à charnière et apte à être fermé et verrouillé dans une position d'obturation de l'ouverture, qui est une position dans laquelle des moyens de verrouillage maintiennent un serrage entre le composant et le couvercle avec un écrasement d'un joint périphérique de la cartouche entre un épaulement ou gorge du composant et une extrémité inférieure du couvercle.

Selon un aspect, il est aussi un procédé d'assemblage d'une cartouche filtrante de purification d'air incluant deux éléments filtrants, par utilisation d'un cadre (typiquement rigide), comprenant les étapes consistant essentiellement à :
- fournir le cadre qui s'étend de façon annulaire autour d'un axe longitudinal en présentant une face intérieure depuis laquelle est formé un rebord accessible depuis deux extrémités axiales opposées du cadre, le rebord étant formé dans une portion de paroi transversale ajourée présentant des trous ou fentes de passage ;
- encoller le rebord par un dépôt d'un matériau de collage, en utilisant une première ouverture prévue dans l'une des deux extrémités axiales, en déposant au moins une dose fluide (fluidifiée à chaud ou avant durcissement) de matériau de collage, de façon à distribuer une quantité du matériau de collage dont une partie sert à obtenir à température ambiante une couche solide dite supérieure le long d'un dessus du rebord ;
- laisser couler une excédent de matériau de collage encore fluide issu de ladite quantité, dans les trous ou fentes de passage, afin de permettre un encollage distribué sur le dessus et le long d'un dessous dudit rebord, en limitant l'écoulement vers le bas du matériau de collage par une contre-surface d'un outil disposée à l'aplomb du rebord dans une région annulaire sous-jacente au rebord, ce grâce à quoi le matériau de collage peut aussi former à température ambiante une couche solide dite inférieure ;
- réaliser grâce au matériau de collage deux fixations sur ledit cadre, par mise en contact de chacun des deux éléments filtrants avec une couche correspondante choisie respectivement parmi la couche supérieure et la couche inférieure, en obtenant une première étanchéité annulaire entre le cadre et le premier élément filtrant et une deuxième étanchéité annulaire entre le cadre - le deuxième élément filtrant.

Ce procédé peut permettre de simplifier l'assemblage, en évitant par exemple de contrôler séparément la température de deux matériaux de collage déposés séparément pour la fixation. On comprend que la première fixation peut être réalisée sur le côté depuis lequel la totalité de la quantité en matériau de collage a été versée.
Eventuellement, on peut optimiser la quantité de matériau utilisée, sachant que la portion de paroi transversale, généralement annulaire, peut être mince/limitée dans son épaisseur qui peut être inférieure ou égale à une épaisseur de la paroi latérale du cadre.

Selon des options, il peut être prévu au moins une des dispositions suivantes :
- entre le démarrage respectif des deux fixations, une durée suffisante s'écoule pour s'assurer du maintien de l'élément filtrant lié en premier au matériau de collage.
- entre deux fixations, le cadre et l'outil sont écartés l'un de l'autre, la contre surface de l'outil restant en contact avec la couche inférieure dans un état encore fluide lors d'une première fixation prévue pour fixer l'un parmi les premier et deuxième éléments filtrants.
- une deuxième fixation est prévue après un retournement du cadre suivi d'un retrait de l'outil, afin de fixer l'autre parmi les premier et deuxième éléments filtrants et obtenir ainsi une configuration superposée du deuxième élément filtrant et du premier élément filtrant qui sont séparés par le rebord (rebord intérieur).
- l'une des deux fixations est réalisée dans une cavité du rebord, les trous de la portion annulaire ajourée débouchant axialement par le fond de cette cavité.
- l'autre des deux fixations peut être réalisée dans une autre cavité du rebord, avec éventuellement un profil à section en T prévu dans le rebord afin de permettre de délimiter par l'intérieur l'une et l'autre des cavités.
- les deux cavités sont séparées (axialement suivant une direction de l'axe longitudinal du cadre) l'une de l'autre par la portion de paroi ajourée.
- le matériau de collage est une colle qui peut être à base d'un thermoplastique thermofusible.
- le matériau est distribué par exemple par un pistolet afin de garantir le dépôt d'un volume de colle constant et stable dans la cavité du cadre, par le dessus tandis que la contre-surface peut être disposée contre un flanc/projection intérieure axiale du rebord, de façon à fermer la cavité opposée située plus bas.

Un procédé d'assemblage d'un filtre/dispositif de filtration d'air tel que susmentionné (dispositif avec un boîtier apte à être disposé verticalement), peut prévoir de :
- délimiter, par un composant/corps de boîtier, un logement accessible par le haut via une ouverture, le composant disposant en outre d'un étrier de fixation incluant un bord de prise situé plus haut que l'ouverture ;
- monter de façon mobile, par une liaison à charnière, un couvercle sur un côté dudit composant, ce côté faisant partie d'une bordure de l'ouverture, ce grâce à quoi le composant et le couvercle constituent le boîtier ;
- disposer des moyens de séparation, comprenant au moins un média perméable à l'air, dans un compartiment intérieur délimité par le composant de boîtier, les moyens de séparation appartenant à la cartouche filtrante susmentionnée se montant de façon amovible et en un seul bloc dans ledit compartiment par insertion au travers de l'ouverture, un premier élément filtrant de la cartouche filtrante permettant de retenir des particules et des poussières du côté opposé à une sortie prévue sur le couvercle ; et
- afin de permettre un verrouillage d'une position fermée du couvercle, dans laquelle l'ouverture est recouverte pas une partie d'obturation appartenant au couvercle, actionner, par utilisation d'une liaison pivot, une partie supérieure d'un élément de verrouillage ayant en outre une portion inférieure d'ancrage s'engageant sous un bord de prise solidaire/intégré au composant de boîtier, de façon amovible pour maintenir un serrage entre le composant de boîtier et le couvercle, typiquement avec un écrasement d'un joint périphérique porté par la cartouche.

Dans une réalisation, il est prévu une utilisation de la cartouche dans un boîtier pour filtrer l'air acheminé dans un système de batterie ou de pile à combustible. Dans une autre application, le dispositif sert à filtrer l'air acheminé dans un circuit d'alimentation d'air d'un moteur à combustion interne, en particulier pour moteur de véhicule (automobile par exemple).

Dans des options, le joint (périphérique) prévu sur l'élément filtrant est apte à appliquer, lorsqu'il n'y a plus de serrage exercé par le deuxième système d'attache, une force de séparation à l'élément filtrant pour relever légèrement ce dernier et/ou pour repousser le couvercle vers le haut. Le joint n'étant plus écrasé, un effet de rappel vers la forme nominale du joint (qui est à mémoire de forme) peut permettre un effet d'expansion dans la direction au moins suivant une direction verticale/perpendiculaire à la liaison à charnière et perpendiculaire au plan de l'ouverture du composant de boîtier.

### Brève description des dessins

D'autres caractéristiques, détails et avantages apparaîtront à la lecture de la description détaillée ci-après, et à l'analyse des dessins annexés, sur lesquels :
La figure 1 montre par une coupe une cartouche filtrante à deux éléments filtrants, dans un état monté dans un boîtier de filtre à air.
La figure 2 est une vue en perspective du filtre à air de la figure 1, dont le boîtier peut loger une cartouche filtrante de façon amovible pour permettre un remplacement de celle-ci, par déplacement du couvercle.
La figure 3 est une vue en perspective montrant la cartouche de la figure 1, avec les deux éléments filtrants montés au travers du cadre ici illustré, avec un joint, en transparence pour illustrer la zone de collage obtenue du côté intérieur du cadre.
La figure 4A est une vue en perspective, par un dessus, d'un cadre avant encollage qui peut correspondre au cadre de la cartouche de la figure 3, le cadre ayant une portion de paroi ajourée prévue dans un rebord intérieur de ce cadre.
La figure 4B illustre un détail de la structure du cadre de la figure 4A, dans un exemple utilisant deux cavités ayant une largeur identique ou similaire au niveau du rebord intérieur.
La figure 5 illustre un détail de la cartouche de la figure 3, avec une coupe permettant d'illustrer deux zones de fixation réparties de part et d'autre du rebord intérieur du cadre.

### Description de modes de réalisation

Ci-après un exposé détaillé de plusieurs modes de réalisation de l'invention assorti d'exemples et de référence aux dessins. Sur les différentes figures, des références identiques indiquent des éléments identiques ou similaires.

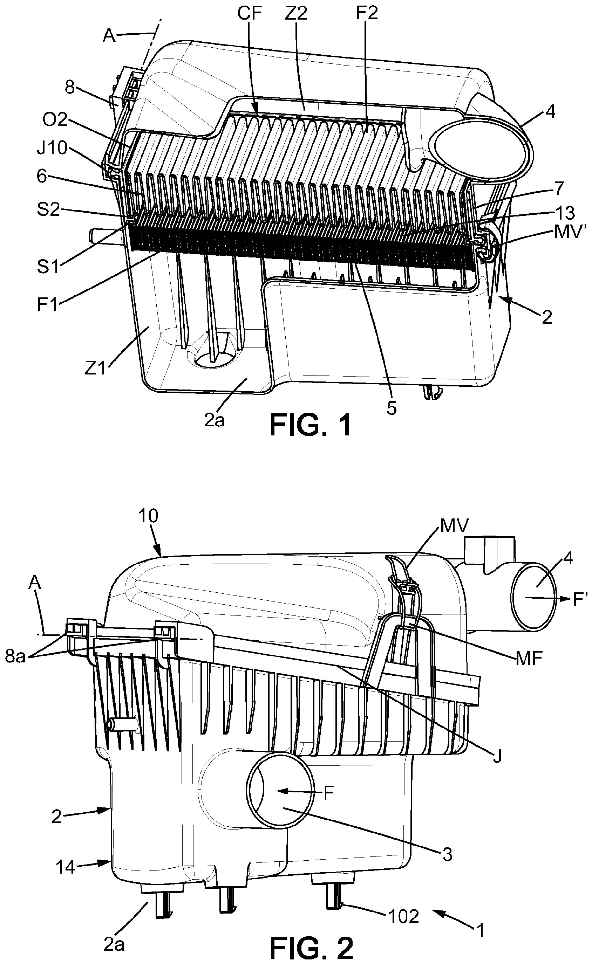

En référence aux figures 1 et 2, il est illustré un dispositif de filtration 1 prévu pour la purification d'un flux d'air F brut (éventuellement préfiltré) provenant de l'extérieur, ce dispositif/filtre étant dans la ligne d'aspiration d'un moteur à combustion interne ou d'un composant de moteur, par exemple un accumulateur ou une source d'énergie (une pile à combustible, à hydrogène par exemple). Ce dispositif 1 peut être placé dans une ligne ou circuit d'admission d'air pour un moteur. Dans le cas d'un véhicule automobile, le dispositif 1 peut être disposé dans la ligne, en tant que dernier filtre avant un collecteur d'admission d'un moteur, entrée similaire de réception d'air purifié d'un moteur ou boîtier d'un générateur électrochimique.

Comme visible sur la figure 2, le dispositif 1 comprend un boîtier 2 pourvu d'une entrée 3 et d'une sortie 4. Un corps ou composant 14 de boîtier permet par exemple de définir un fond 2a du boîtier 2. Un couvercle 10 peut être monté mobile ou amovible sur le composant 14. Ce couvercle 10 recouvre le composant 14 par le dessus dans l'exemple non limitatif illustré. Une configuration bombée peut être utilisée pour augmenter le volume intérieur du boîtier au-dessus d'une jonction J. Plus généralement, ce volume intérieur permet d'installer une cartouche filtrante CF. Dans des options de montage, on prévoit en particulier une position suspendue et/ou espacée de la cartouche filtrante CF par rapport au fond 2a, comme dans le cas visible sur la figure 1.

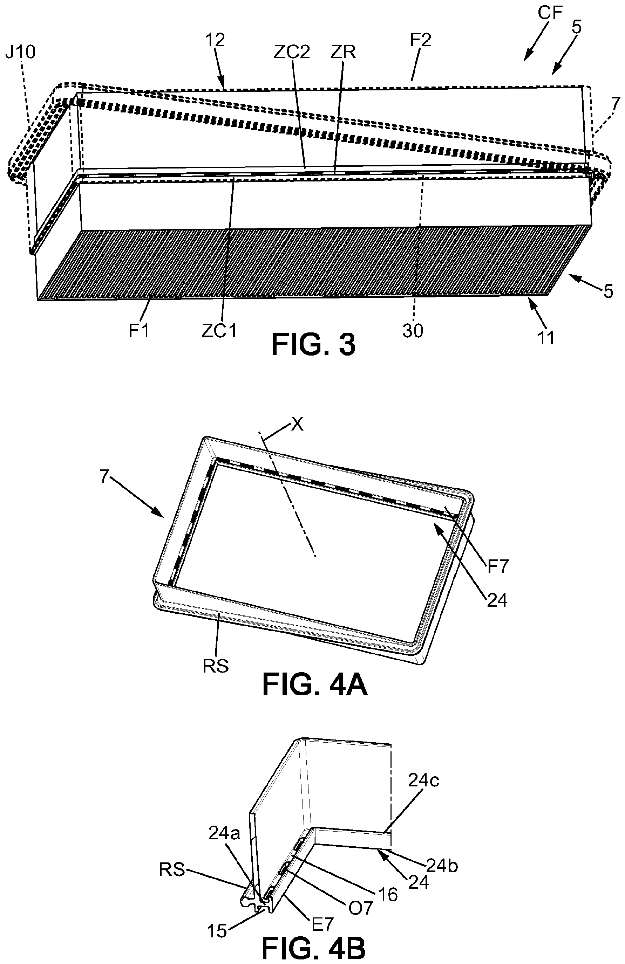

La cartouche CF peut inclure une structure de support, ici sous la forme d'un cadre permettant de délimiter un périmètre extérieur de la cartouche CF. Le cadre 7 peut aussi servir de partie de préhension, rigide, pour saisir la cartouche CF. Le cadre 7 peut s'étendre de façon annuaire autour d'un axe longitudinal X, comme montré notamment sur la figure 4A, en s'étendant entre une extrémité inférieure 7a annulaire et une extrémité supérieure 7b annuaire. Une face F1 formée par un premier média 5 de filtration, pouvant être orientée en regard du fond 2a à l'état monté, peut constituer une entrée de la cartouche filtrante CF. Cette face F1 est axialement espacée du fond 2a, de sorte qu'il est prévu, sous cette face F1 :
- une sous-zone de circulation d'air (air brut) adjacente à l'entrée 3 formée dans le composant 14 ; et
- optionnellement, une sous-zone formant réserve d'air décalé latéralement par rapport à l'entrée 3 et délimitée entre le fond 2a et la face F1.

Plus généralement, le volume intérieur du boîtier 2 inclut une chambre de filtration. La partie filtrante du dispositif 1, logée dans le volume intérieur, est ici une cartouche CF qui peut comporter des moyens de séparation du type incluant des médias 5, 6 de filtration et permettant de séparer une zone d'amont Z1, prévue dans la chambre de filtration et communiquant avec l'entrée 3, d'une zone d'aval Z2 communiquant avec la sortie 4. La zone Z1 peut être disposée sous-jacente à la cartouche dans des réalisations du boîtier 2 avec l'entrée disposée plus bas que la sortie. Un flux d'air purifié F' ressort par une face de sortie F2 des moyens de séparation/médias de filtration 5, 6 en traversant la zone d'aval Z2 et en rejoignant la sortie 4. Une des couches de filtration (au moins) de la cartouche filtrante CF permet de retenir des liquides aqueux, chaque couche étant perméable à l'air. Cette cartouche permet de délimiter une zone propre, correspondant à zone d'aval Z2 qui, dans des options typiques, s'étend notamment dans un creux du couvercle 10.
Dans des variantes de boîtier, l'entrée 3 et la sortie 4 peuvent être disposées à des niveaux de hauteur comparable ou avec une sortie située plus bas dans le boîtier 2 à l'état monté.

La chambre de filtration peut être entourée par une paroi latérale du boîtier 2, qui est une paroi de forme générale tubulaire, éventuellement à quatre côtés. Le composant de boîtier 14 formant le fond 2a du boitier 2 peut former au moins en partie cette paroi latérale. Le composant de boîtier 14 peut présenter deux flancs, une face avant et une face arrière opposée à la face avant. Une large ouverture O2 est formée à l'extrémité supérieure du composant de boîtier 14, cette ouverture O2 étant délimitée par une bordure annulaire qui peut inclure une bride ou rebord (typiquement saillant vers l'extérieur) analogue.

Le boîtier 2 du filtre 1 est fermé lors du fonctionnement, et peut s'ouvrir en disposant d'un couvercle 10 articulé via une liaison à charnière 8 sur le composant de boîtier 14. La liaison à charnière 8 peut correspondre à un premier système d'attache du boîtier 2. Dans ce cas non limitatif, un deuxième système d'attache est prévu en outre pour permettre le verrouillage du couvercle 10 avec un serrage de ce couvercle 10, par exemple afin de le maintenir fermé contre la bordure formée à l'extrémité supérieure du composant de boîtier 14. Le déverrouillage du couvercle 10 peut être permis par au moins un élément de verrouillage MV, MV' pouvant inclure un ou des clips.

Le composant 14 peut être configuré avec épaulement interne ou des moyens de support intérieurs adaptés pour soutenir la cartouche par le bas, de sorte que la cartouche filtrante CF est dans sa position prédéfinie par rapport au composant 14 avant la mise en place du couvercle 10 en position d'obturation de l'ouverture O2. Dans des variantes, la cartouche filtrante CF peut être préalablement fixée, par exemple emboîtée, dans le couvercle 10, avant d'occuper sa position finale dans la chambre de filtration.
Il peut être prévu que le cadre 7 de la cartouche CF porte l'interface de fixation en contact avec le composant 14 et de préférence aussi avec le couvercle 10, ce qui permet une immobilisation axiale de la cartouche filtrante CF à l'intérieur du boîtier 2. Le format du cadre 7 est en outre non circulaire pour permettre un effet anti-rotation, par exemple en formant un contour polygonal, éventuellement rectangulaire comme le cas illustré sur la figure 3 et sur la figure 4A.

### Exemple(s) de construction des éléments filtrants

Le filtre 1 peut présenter des moyens de séparation distribués au moins entre le premier média 5 d'un premier élément filtrant 11 et le deuxième média 6 prévu dans un deuxième élément filtrant 12, en rassemblant ces médias 5, 6 dans la cartouche filtrante CF qui est apte à se monter d'un seul tenant dans le boîtier 2 et à se retirer d'un bloc. Plus généralement, le premier élément filtrant 11 et le deuxième filtrant 12 peuvent être conçus séparément avant une phase d'assemblage avec le cadre 7 pour permettre de réaliser la cartouche filtrante CF, indépendamment du nombre total de couches ou médias de filtration prévus dans le filtre 1. Comme décrit plus loin, un rebord 24 du cadre 7 peut former un support de fixation, en particulier de fixation par collage, commun au premier élément filtrant 5 et au deuxième élément filtrant 6. En outre, la cartouche CF peut, le cas échéant disposer de couches additionnelles de filtration rapportées par l'extérieur du cadre 7 , dans des variantes de réalisation utilisant au moins un élément de filtration additionnel.

Chacun parmi le premier média 5 et le deuxième média 6 peut être perméable à l'air et compact, éventuellement sous forme d'un bloc filtrant à plusieurs couches superposées. Les couches de filtration peuvent être superposées en s'étendant généralement de façon parallèle l'une à l'autre. Au moins une des couches est de type cellulosique. Additionnellement ou en alternative, une couche peut inclure un matériau d'adsorption, du carbone éventuellement, par exemple sous forme de charbon actif.

Un premier composant filtrant constitutif du média 5 est par exemple prévu et un deuxième composant filtrant constitutif du média 6 est aussi disposé dans la chambre de filtration délimitée par le boîtier 2 du dispositif 1. Le deuxième composant filtrant est conçu et agencé pour permettre au deuxième média 6 de séparer des molécules ou des particules plus fines ayant pu traverser le premier étage de séparation formé par le premier média 5. Dans des exemples, le premier étage permet de séparer notamment des particules de taille millimétrique ou submillimétrique tandis que le deuxième média (formant un deuxième étage de filtration intégré dans la cartouche CF) permet de séparer des particules ou molécules cibles de taille submillimétrique et/ou submicrométrique.

Le premier média 5 ou le deuxième média 6 peut inclure une matière carbonée, par exemple du charbon actif. Dans un exemple non limitatif le charbon actif peut représenter plus de la moitié du poids total du deuxième média 6. Plus largement, le dispositif formant le filtre à air 1 peut présenter une ou plusieurs couches de filtration dont l'une au moins a un effet d'adsorption de composés chimiques volatils.

Afin de former un premier étage de filtration qui sépare des particules solides venant de l'environnement extérieur, le premier élément filtrant 11 peut présenter un média 5 à base de fibres, par exemple incluant de la cellulose. Des polluants spécifiques, par exemple ayant un pouvoir oxydant vis-à-vis d'éléments de la région cible où est acheminé l'air purifié évacué par la sortie 4, peuvent être séparés (le cas échéant sélectivement séparés) par une couche filtrante inclue dans le média 6 du deuxième élément filtrant 12.
Dans des exemples de réalisation, le deuxième étage de séparation présente une fonction d'adsorption de molécules du flux d'air.

Dans une réalisation, le média 6 rassemble plusieurs couches de filtration, par exemple au moins trois couches dont l'une inclut un composé d'adsorption distribué sous forme de grains solides et présentant une porosité. Le composé d'adsorption est par exemple réparti, typiquement de façon homogène, dans une couche intermédiaire entre deux couches de filtration permettant de maintenir les grains de carbone. Ce composé peut être un charbon actif.

Dans le boîtier 2, la cartouche filtrante CF peut être configurée pour obliger 100% du flux F passant par l'entrée 3, à traverser toutes les couches de filtration de la cartouche CF. En particulier, le flux d'air travers traverse d'abord une face externe (première face F1) du premier élément filtrant 11, ressort d'une autre face opposée 11a de cet élément 11 en rejoignant un espace intercalaire 13 entre les deux élément filtrants 11, 12 qui se situe dans l'intérieur du cadre 7, puis traverse le deuxième élément filtrant 12. Pour cela, chacun parmi le premier élément filtrant 11 et le deuxième élément enfant filtrant 12 peut inclure une partie périphérique permettant, chacune, de réaliser une étanchéité par un contact annulaire circonférentiel respectif contre l'intérieur du cadre 7.

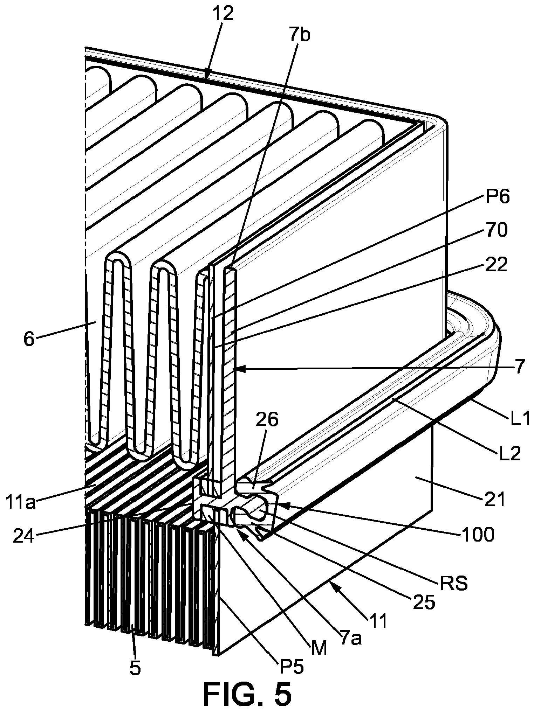

En référence à la figure 5, on peut voir par exemple un premier élément filtrant 11 qui dispose d'un membre périphérique 21, de format annulaire, configuré pour entourer le média 5 de filtration, en incluant une extrémité axiale de raccordement sur le cadre 7. Dans des exemples de réalisation non limitatifs, le membre périphérique 21 définit une paroi P5 rectangulaire dont la hauteur peut être sensiblement égale ou légèrement supérieure à la hauteur du premier média 5, qui peut être optionnellement plissé avec des plis parallèles entre eux. Au moins une partie de cette paroi P5 peut être recouverte par l'extérieur par une portion du cadre 7, par exemple une portion basse rectangulaire qui s'étend longitudinalement vers le bas depuis le rebord 24.
Bien entendu, la géométrie rectangulaire peut être remplacée par une géométrie différente, par exemple avec certains côtés opposés non parallèles et/ou en présentant au moins cinq côtés. On comprend que le membre périphérique 21 annulaire a une fonction de support du premier média de filtration 5 qui est relié au membre périphérique 21, de préférence en étant fixé à une face intérieure du membre périphérique 21, ici sur la paroi P5.

Comme le premier élément filtrant 11, le deuxième élément filtrant 12 a une fonction de support du deuxième média de filtration 6 qui est relié à une ceinture périphérique 22, de préférence en étant fixé à une face intérieure de cette ceinture 22, sur la paroi P6. Il peut présenter aussi un périmètre externe défini de façon adaptée, en dimension et en forme géométrique, pour permettre une insertion au moins partielle dans le cadre 7, par le dessus. Le deuxième élément filtrant 12 peut rester alors entièrement sur un côté du rebord 24, ici au-dessus du rebord 24 à l'état fixé, dans une réalisation préférée.

La ceinture 22, de format annulaire, est configurée pour entourer le média 6 de filtration, en incluant une extrémité axiale de raccordement sur le cadre 7. Dans des exemples de réalisation non limitatifs, la ceinture périphérique 26 définit une paroi P6 sensiblement de même format géométrique que la paroi P5 pour ce qui concerne sa circonférence. La paroi P6 peut être recouverte par l'extérieur par le cadre 7 tout en délimitant une section de passage pour l'air qui est proche de ou sensiblement identique à la section de passage pour l'air délimitée par la paroi P5.
La hauteur de la paroi P6, éventuellement supérieure à celle de la paroi P5 dans certaines options, peut être sensiblement égale ou légèrement supérieure à la hauteur du deuxième média 6, qui peut être plissé avec des plis parallèles entre eux.

Le membre périphérique 21 et la ceinture périphérique 22 ont chacun une structure à extrémité annulaire saillante axialement (parallèlement à l'axe X une fois les éléments filtrants 11, 12 montés sur la cadre 7) par rapport au média 5, respectivement au média 6, porté sur l'intérieur, de façon à dépasser, chacune par rapport à une face de délimitation de l'espace intercalaire 13. La fixation sur le cadre 7 peut ainsi être réalisée par de telles extrémités saillantes, en particulier par collage, sans interférence d'encollage sur le média 5 ou 6.

Les parties périphériques 21 et 22 peuvent inclure chacune une feuille d'un matériau, par exemple une feuille de matériau synthétique/plastique mis en forme pour avoir une conformation rigide. Sur cette partie périphérique 21, 22, un dépôt d'une colle ou matériau, par exemple thermofusible et apte à être réactivée (à chaud), peut être réalisé avant de fixer le média correspondant 5, 6. Une opération d'encollage sur chaque média 5, 6, qui est par exemple plissé, peut être ainsi facilitée.
Plus largement, chaque partie périphérique 21, 22 peut permettre de :
- de maintenir en position les deux médias plissés lors d'étapes de conception de la cartouche CF, notamment lors des fixations entre le cadre et les éléments d'étanchéité 11, 12 ;
- d'assurer/participer à une étanchéité entre la partie sale de l'élément filtrant 11 et respectivement 12, située en bas, et la partie propre de cet élément 11, 12 ; et
- d'assurer une bonne efficacité de la filtration en limitant le passage de divers types de particules entre la zone d'amont Z1, l'espace intercalaire 13 et la zone d'aval Z2.

### Exemple de cadre de support

En référence aux figures 4A,4B et 5, le cadre 7 peut être réalisé en une seule pièce. Le cadre 7 peut disposer d'un rebord 24 intérieur incluant une portion annulaire 24a qui est ajourée, de sorte que des trous O7 forment des passages traversants entre un dessus du rebord 24 et un dessous du rebord 24. Ce dessus inclut une première surface S1, tandis que le dessous inclut une deuxième surface S2 qui peut optionnellement être parallèle à la première surface S1.

Sur la portion annulaire 24a qui fait saillie radialement vers l'intérieur depuis une face intérieure F7 du cadre 7, des projections axiales orientées en sens opposées sont formées en constituant p :
- une première projection axiale 24b, par exemple annulaire, permettant de délimiter, en formant une circonférence intérieure à effet de retenue latérale pour le matériau de collage encore fluide, une cavité inférieure 15, optionnellement avec un espacement sensiblement constant entre la face intérieure F7 et la première projection ; et
- une deuxième projection axiale 24c, par exemple annulaire et pouvant être réalisée comme une extension vers le haut qui s'étend parallèlement et à l'opposé de la première projection axiale 24b, permettant de délimiter une cavité supérieure 16, optionnellement avec espacement sensiblement constant entre la face intérieure F7 et la deuxième projection.

Chacune des cavités 15, 16 peut recevoir une extrémité correspondante d'élément filtrant 11, 12, de sorte que, en présence d'un matériau de collage M :
- un bord libre du membre périphérique 21 est noyé dans le matériau de collage et inséré dans une cavité correspondante, par exemple la cavité inférieure 15 ;
- un bord libre de la ceinture périphérique 22 est noyé dans le matériau de collage et inséré dans une cavité correspondante, par exemple la cavité supérieure 16.
On comprend que le matériau de collage M peut se fixer et reposer, dans un état solidifié, à la première surface S1 et à la deuxième surface S2, en particulier sur la région de fond des cavités respectives 15 et 16.

La deuxième projection axiale 24c peut, pour cette cavité supérieure 16, former une circonférence intérieure à effet de retenue latérale pour le matériau de collage encore fluide. De cette façon, le matériau de collage M peut rester cantonné le long de la face F7. Dans des variantes de réalisation, un nombre supérieur de cavités peut être utilisé dans la fixation des deux éléments filtrants 11, 12 et/ou le remplissage en matériau de collage M peut être fait via un accès indirect à une cavité de réception d'une extrémité d'élément filtrant 11, 12.

Plus généralement, on prévoit que le cadre 7 entoure à la fois le membre périphérique 21 et la ceinture périphérique 22 tout en permettant, en recevant une couche de matériau de collage dédoublée pour occuper deux cavités 15, 16 qui communiquent entre elles par les ouvertures O7 avant remplissage, une fonction de maintien du premier élément filtrant 11 et du deuxième élément filtrant 12, dans une configuration superposée avec espacement prédéterminé, correspondant à l'espace intercalaire 13, entre les média de filtration respectifs 5 et 6 qui sont disposés face à face dans le creux du cadre 7.

Dans l'exemple illustré, le rebord 24 intérieur inclut un profil à section en T, de manière à délimiter, avec la face intérieure du cadre 7, la cavité inférieure 15 et la cavité supérieure 16. Ceci permet à un matériau de collage M de remplir les cavités supérieure et inférieure 16, 15 en profitant d'un écoulement de matériau de collage encore fluide, alors que celui-ci est versé depuis un seul côté du cadre, le long de la face F7 du cadre 7. Dans certains cas, il est permis d'utiliser un cadre 7 ayant, sur un côté donné par rapport au rebord 24, une paroi latérale 70 qui s'étend autour de l'axe longitudinal X, qui dépasse la profondeur de n'importe laquelle des cavités 15 ,16. Sur le côté opposé à la paroi latérale 70, le cadre 7 peut présenter une extrémité basse inférieure 7a, typiquement annulaire. La face intérieure F7 peut être distribuée sur la paroi latérale 70 et sur l'extrémité basse qui est typiquement plus courte que la paroi latérale 70.
Lors du versement du matériau de collage M par un côté, la paroi latérale 70 peut éventuellement avoir un effet de guidage pour l'écoulement de ce matériau, dans la cavité supérieure 16, qui induit le remplissage de la cavité inférieure 15 via les trous O7 de la paroi ajourée 24a.

Sur une face extérieure du cadre 7, il est éventuellement prévu un organe de fixation permettant un effet de maintien en suspension de la cartouche CF sur le boîtier 2. Dans les cas non limitatifs illustrés sur les figures 1, 3 et 5, un tel organe de fixation se présente sous la forme d'un relief saillant RS annulaire enveloppé par un joint J10.

Quelle que soit la conception du cadre 7, par assemblage de pièces ou fabriqué (par exemple moulé) en une seule pièce, la cartouche CF peut inclure une région extérieure de contact avec un joint annulaire J10 apte à délimiter une périphérie de la partie filtrante incluant les couches/médias 5, 6. La partie filtrante correspond par exemple à un produit inséré et posé ou fixé de manière amovible sur un bord annulaire. Dans une conception à plusieurs pièces, le rebord 24 peuvent éventuellement appartenir à une pièce rapportée et fixée sur l'intérieur de la paroi 70 (paroi 70 éventuellement en une pièce pouvant déjà inclure le relief saillant RS). La portion à section en T est prévue en tant que portion E7 venue de matière avec le reste du cadre 4 ou comme pièce rapportée.
Le joint J10 est à base d'un élastomère, par exemple EPDM. Déformable, il peut présenter une section en U, venant enserrer un rebord ou relief RS radialement saillant vers l'extérieur et s'étendant sur la circonférence du cadre 7.

La fixation amovible de la cartouche CF peut être réalisée sur un cadre ou un rebord annulaire formé dans le composant de boîtier 14. Le joint J10 peut être en contact étanche sur une circonférence intérieure du composant de boîtier 14, par exemple en venant appuyer par le dessus sur une zone de siège de même forme générale (par exemple rectangulaire) et même dimensions que le joint J10 (voir par exemple le cas non limitatif de la figure 1).
Le relief externe RS circonférentiel, prévu sur le cadre 7, peut permettre de maintenir à lui seul le joint J10 en position autour de la paroi 70. Pour cela, le joint peut présenter une première portion de recouvrement 25 qui recouvre le relief RS par le dessous et une deuxième portion de recouvrement 26 recouvrant le relief RS par le dessus. Dans des options, un profil du joint en U peut être adopté. Sur le cadre 7, le relief externe RS peut présenter un premier côté situé sensiblement au même niveau que le rebord 24, et d'autres côtés pour lesquels ce relief externe RS peut s'étendre plus haut que le rebord 24, notamment au moins pour que le joint J10 puisse être plus bas, du côté de la sortie 4 du boîtier, et s'étendre plus haut à l'opposé de cette sortie 4.

Lorsque le joint J10 inclut une section transversale généralement en U, il peut aussi présenter deux lèvres d'étanchéité L1, L2 dont :
- une première lèvre L1 annulaire qui se raccorde par le dessous à la première portion de recouvrement 25, en faisant saillie vers le bas et vers l'extérieur jusqu'à un bord libre de la première lèvre ; et
- une deuxième lèvre L2 qui se raccorde par le dessus à la deuxième portion de recouvrement 26, en faisant saillie vers le haut et vers l'extérieur jusqu'à un bord libre de la deuxième lèvre. Ces lèvres L1, L2 peuvent faciliter une compression réversible lors que le couvercle 10 vient se fermer en pressant le joint J10 déjà en appui sur la zone de siège qui peut correspondre à un épaulement intérieur ou gorge du composant de boîtier 14, située autour de l'ouverture O2.

La cartouche filtrante CF est montée amovible en s'étendant optionnellement sous la sortie 4 appartenant au couvercle 10.
La distance de la face d'entrée F1 de l'élément filtrant 11 ou face inférieure similaire de la cartouche CF, par rapport au fond 2a, peut être supérieure ou égale à la hauteur de l'entrée 3 lorsque cette dernière est formée latéralement sur le composant 14.
Indépendamment ou en complément de cela, la distance (typiquement une distance verticale) entre la zone de siège pour le joint J10 et le fond 2a peut être supérieure à la hauteur de la cartouche CF telle que mesurée suivant a direction de l'axe longitudinal X à l'état monté. Il peut être alors ménagé une zone de collecte/décantation de l'eau (eau séparée par cette cartouche CF, en particulier par le premier élément filtrant 11) du côté du fond 2a. L'écartement vertical important par rapport au fond 2a peut permettre de disposer d'une réserve d'air à l'intérieur du composant de boîtier 14, directement sous la cartouche filtrante CF.

### Assemblage de la cartouche filtrante

La cartouche filtrante CF peut avoir un format de panneau filtrant, le cadre 7 réalisant une délimitation par l'extérieur de cette cartouche. Ce cadre 7 peut être disposé horizontalement, en s'étendant de façon sensiblement parallèle aux fond 2a, avec un joint J10 qui peut éventuellement être horizontal ou qui peut être penché avec une inclinaison montante en directe d'une liaison à charnière 8. L'axe A défini par les composants de charnière 8a de la liaison 8 peut être sensiblement horizontal à l'état monté. Indépendamment du type de boîtier 2 utilisé, la cartouche CF peut combiner un certain nombre d'éléments filtrants dont :
- le premier élément filtrant 11 raccordé au cadre 7 par une couche de fixation accessible par un côté dit inférieur en évitant par exemple à la face 11a du média 5 de s'étendre ailleurs qu'en vis-à-vis de l'ouverture basse du cadre 7 ; et
- le deuxième élément filtrant 12 raccordé au cadre 7 par une couche de fixation accessible par un côté dit supérieur en évitant par exemple au média 6 de s'étendre latéralement au-delà de la périphérie du cadre 7.

Après la conception respectivement du premier élément 11 et du deuxième élément 12, il est prévu de fixer sur le cadre 7 successivement l'un puis l'autre de ces éléments 11, 12. Dans un procédé d'assemblage de la cartouche CF, le cadre 7 peut être engagé sur un outil de maintien venant s'engager contre le rebord intérieur 24. Ce rebord 24 peut agir comme une butée axiale sur laquelle vient s'engager une contre-surface de support, prévue dans l'outil, qui permet de boucher axialement une cavité 15 ou 16 (visible sur la figure 4B notamment) pour un effet anti-écoulement du matériau M déposé sous forme de colle encore fluide.

Dans un exemple non limitatif prévoyant de fixer d'abord le deuxième élément filtrant 12, la contre-surface peut venir s'insérer sous ou dans la zone creuse du cadre délimitée par la paroi 70, jusqu'à venir en contact avec l'une des projections 24b ou 24c. Le cadre 7 est alors orienté verticalement. En référence à la figure 5, le procédé peut prévoir de présenter l'extrémité 7a tournée vers le bas dans un premier temps, avec la cavité 16 prête à recevoir un matériau de collage M versé par le dessus.
La contre-surface, sous-jacente au rebord 24, forme provisoirement un fond d'un logement annulaire compartimenté avec : la cavité 15, la cavité 16 et les trous O7 agencés entre ces deux cavités 15, 16.

Le procédé comprend une étape de dépôt du matériau de collage, par exemple à chaud, encore fluide, afin de remplir successivement chacun des compartiments du logement annulaire, jusqu'à une fin de remplissage permettant de disposer d'une épaisseur de couche suffisante de matériau de collage M dans les deux cavités 15 et 16. Le matériau de collage M migre dans la partie inférieure du logement annulaire et vers la contre-surface (surface typiquement pleine/non ajourée) par les trous O7 prévus à cet effet. Dans des options, le matériau de collage M est thermofusible et déposé encore chaud. Dans d'autres options, le matériau de collage M peut aussi être de type bi-composant, avec un durcisseur, ou ayant toute composition adaptée permettant l'obtention provisoire d'un état fluide.

Après ce remplissage, la fixation du deuxième élément filtrant 12 est ensuite permise en introduisant une extrémité de la ceinture périphérique 22 dans la cavité 16, avec le matériau de collage M par exemple réparti de chaque côté de cette extrémité qui est généralement annulaire, après l'insertion. L'extrémité de la ceinture périphérique 22 peut être noyée sélectivement dans la zone ZC2 de contact pour collage, dans une deuxième sous-couche du matériau M longeant la deuxième surface S2, distale/opposée à la contre-surface. Le média 6 peut éventuellement rester espacé (axialement séparé) de la zone ZC2.
Pendant la première étape de fixation d'élément filtrant, la contre-surface reste maintenue en contact contre la projection basse 24b ou 24c, par exemple en étant accolée à la projection 24a lorsque le premier élément filtrant 12 est débord fixé au cadre 7.

Afin de fixer ensuite le premier élément filtrant 11, le cadre 7 est séparé/extrait de l'outil et un retournement est réalisé, par exemple à 180°, afin de procéder à l'encollage de cet élément filtrant 11. Soit le retournement est suffisamment rapide et peut être réalisé après la séparation de l'outil. Soit le retournement peut être réalisé en conservant la position de contact entre la contre-surface et le cadre 7, avant de séparer l'outil par un déplacement ascendant de ce dernier. On comprend alors que l'extrémité 7a est orientée vers le haut.

Le premier élément filtrant 11, qui peut être celui destiné à être l'élément inférieur dans la cartouche filtrante CF à l'état monté dans le boîtier 2, peut alors être posé sur le côté encollé du rebord 24 du cadre 7 (côté encore disponible) avec insertion au moins d'une extrémité saillante prévue sur le membre périphérique 21, de sorte que ce membre 21 est au moins partiellement introduit dans le matériau de collage M du fait ici de son insertion dans la cavité 15 annulaire ou zone de fixation encollée comparable permettant de réaliser une étanchéité contre le cadre .
En référence à la figure 3, la zone ZC1 de contact pour collage permet, sélectivement, de noyer une partie du premier élément filtrant 11. La zone ZR de remplissage des trous O7 correspond à une sous-couche discontinue liée à la fois la sous-couche de la zone ZC1 et à la sous-couche de matériau M de la zone ZC2.

Après les deux fixations, une cartouche filtrante CF telle que montré sur la figure 3 peut être obtenue. Un montage superposant davantage d'élément filtrants est aussi permis. Selon une réalisation un peu différente incluant trois éléments filtrants dans la cartouche, on peut utiliser un cadre encollé de cette façon et optionnellement au moins un autre cadre formant le même type d'interface. La partie périphérique d'un élément filtrant interposé entre deux autres éléments filtrants peut alors être agencée saillante de part et d'autre de son média pour faciliter une connexion par le dessus et par le dessous, respectivement sur un cadre supérieur et sur un cadre inférieur.

### Exemple de couvercle

L'ouverture O2 du composant de boîtier 14 peut constituer l'unique accès par lequel la cartouche filtrante CF est montée dans le composant de boîtier 14. Le couvercle 10 peut présenter une forme bombée. L'articulation du couvercle 10 et réalisée sélectivement sur un côté du composant 14, par exemple un côté sensiblement rectiligne, qui permet de border l'ouverture O2. Dans l'exemple non limitatif de la figure 1 ou 2, le couvercle 10 est bombé au moins à l'opposé de la liaison à charnière 8. Ce type d'agencement permet d'intégrer des composants externes, des tubes et/ou des tubulures dans une zone à la fois proche de la liaison charnière 8 et l'entrée 3, ce qui peut ensuite laisser de la place pour le côté opposé du couvercle 10, qui requiert un certain débattement afin que le couvercle 10 soit suffisamment levé (sans interférence avec d'autres composants), pour découvrir l'ouverture O2 lorsqu'il faut changer la cartouche filtrante CF.

Dans les exemples illustrés, la sortie 4 présente une certaine mobilité en raison de ce son intégration sur le couvercle 10, à distance de la liaison à charnière 8. Il peut être prévu, du côté opposé à la liaison 8 formant le premier système d'attache, au moins un clip MV' qui appartient au deuxième système d'attache. Le deuxième système d'attache permet une fixation manuelle, sans outil dans des options préférées. Le couvercle 10 inclut un rebord pour la fixation du clip 7, de préférence avec une délimitation entre deux bords de guidage. Le joint 10 peut être logé dans une telle région de rebord (rebord saillant vers l'extérieure) adjacente à l'ouverture O2, par exemple afin de ne pas réduire localement la section pour le passage de la cartouche CF.
La sortie 4 pour l'air purifié peut être décalée verticalement (plus haut) par rapport à une jonction J entre le couvercle 10 et le composant 14, ce qui permet de localiser le clip MV' sous l'ouverture constituant la sortie 4 avec une accessibilité à ce clip MV' permise du fait de l'espacement extérieur disponible prévu pour le débattement du couvercle 10 lorsqu'il est articulé à l'opposé de la sortie 4.

De même que le composant de boîtier 14 peut inclure un siège de retenue pour retenir une extrémité basse du clip MV', qui inclut ici une lame semi-circulaire à effet ressort, le couvercle 10 peut disposer d'une bride qui est chevauchement axial par rapport au joint J10 de la cartouche CF.

Il peut être prévu comme dans le cas non limitatif des figures 1 et 2 , dans une phase de fermeture du couvercle 10, de répartir les moyens/élément des verrouillage MV, MV' sur la périphérie du couvercle 10. Il est éventuellement permis d'attacher d'abord fixement le clip MV', juste après avoir abaissé le couvercle 10 pour former la jonction annulaire J. Après cette première fixation amovible, l'opérateur peut manipuler un ou deux éléments de verrouillage MV' supplémentaires pour s'assurer d'un serrage du couvercle 10 aussi sur deux côtés parallèles du composant de boîtier 10 qui s'étendent transversalement par rapport à la liaison à charnière 8.

En référence notamment aux figures 1 et 2, le couvercle 10 est maintenu fermé avec la jonction J qui peut s'étendre suivant un plan, lorsque chaque élément de verrouillage MV, MV' est enclenché, avec l'obtention d'un état verrouillé du couvercle 10. Quel le soit le mode de fixation précisément adopté, la fixation au couvercle 10 peut être réalisée au-dessus de la jonction J, par exemple en utilisant des extensions ou autres moyens de fixation MF du composant 14 qui viennent former un bord de prise dans une zone en chevauchement par l'extérieur. En référence à la figure 2, il est prévu au moins un étrier de fixation par exemple qui forme une telle extension du composant de boîtier 14. Ce type de disposition permet de multiplier les points de traction/contact de serrage sur le composant 14.

Comme visible sur la figure 2, dans une région suffisamment proche du bord de jonction opposé à la liaison à charnière 8 (bord chevauché ici par le clip MV'), le boîtier 2 peut être pourvu de deux étriers de fixation ou éléments MF analogues fournissant une prise. Les étriers, rigides et à forme de U inversé, sont solidaires chacun du composant de boîtier 14.
Dans des options de réalisation, il peut être réalisé un ou plusieurs clips MV disposés sur le couvercle 10 de façon espacée par rapport à une bride du couvercle 10, en étant verticalement séparés de cette bride. Chacun de ces éléments, portés par exemple dans une partie bombée du couvercle 10 est un clip distal de la jonction J, par opposition au clip MV' en chevauchement sur la jonction J.

### Exemples non limitatifs de paramètres géométriques/dimensionnels

L'entrée 3 peut présenter une disposition intermédiaire en hauteur dans le composant de boîtier 14 logeant tout ou partie des médias 5, 6 de la cartouche CF. La cartouche CF peut présenter un format généralement parallélépipédique avec un périmètre externe rectangulaire du cadre de support 7. Un format également rectangulaire du membre périphérique 21 et de la ceinture 22 peut être prévu pour permettre de distribuer chaque média 5, 6 dans une superposition n'excédant pas la section de passage intérieur délimitée par le cadre 7, en optimisant la surface disponible de filtration. Dans des exemples de réalisation, le deuxième élément filtrant 12 peut être légèrement plus haut que le premier élément filtrant 11.

La jonction J peut s'étendre dans un plan incliné par rapport à un plan du fond 2a du boîtier 2, par exemple avec un angle d'inclinaison supérieur à 5 ou 10° et inférieur ou égal à 30 ou 35°. Le joint J10 peut suivre l'inclinaison de cette jonction J. Le bas ou extrémité inférieure du couvercle 10 peut être dimensionné comme une bride qui vient s'insérer (partiellement ou totalement) dans le volume intérieur du composant 14 afin d'écraser le joint J10. Ainsi, lors du verrouillage d'une position fermée du couvercle 10, l'effet de serrage appliqué à l'aide des éléments de verrouillage MV, MV' accentue l'insertion de l'extrémité inférieure du couvercle 10 dans une région périphérique haute du volume intérieur du composant 14, ce qui permet d'écraser le joint J10 périphérique. Ce joint J10 peut être en siège sur un collerette, un épaulement ou dans une gorge du composant 14.

Dans une forme de réalisation non limitative, l'épaisseur de la couche de filtration formée par le premier média 5 peut être supérieure à 1,5 mm, optionnellement supérieure ou égale à 2 mm sans dépasser 3 mm. La perméabilité à l'air d'une telle couche de filtration peut être supérieure à la perméabilité obtenue dans le deuxième média 6, le premier média 5 ayant éventuellement une perméabilité se situant dans une gamme allant environ de 20 à 45 cc/cm²/sec.

### Assemblage du filtre à air

Le composant de boîtier 2 avec le couvercle associé 10 peut se fixer par le bas sur une région de montage prévue dans un véhicule. En référence à la figure 2, des pattes 102 de fixation peuvent d'étendre en saillie vers le bas depuis la paroi inférieure formant le fond 2a pour permettre un montage par le dessus. On comprend que le boîtier 2 peut être monté à la verticale ou globalement verticalement dans un véhicule, en présentant une extrémité inférieure (formant le fond 2a) parallèle à l'extension de l'élément filtrant EF. De préférence, le boîtier 2 dispose d'une entrée 3 et d'une sortie 4 qui sont chacune éloignées du fond 2a délimitant un dessous de la chambre de filtration.

Le couvercle 10 articulé, basculé en configuration ouverte, découvre l'ouverture O2 qui est alors accessible par le haut, du côté opposé au fond 2a. La cartouche filtrante CF peut alors être maintenue suspendue dans le composant de boîtier 14 en reposant, par le joint J10, sur un épaulement intérieur formé par la paroi latérale du composant 14, à proximité de l'ouverture O2. Ceci permet de ménager un vaste espace d'air sous l'élément filtrant 11 constituant un premier étage de filtration dans la chambre de filtration.

L'articulation du couvercle 10 permet de limiter le nombre de clips ou éléments de verrouillage, par exemple en ne dépassant pas trois clips tout en ayant une bonne efficacité de serrage. Le recours à des étriers ou moyens de fixation similaires MF peut contribuer à bien distribuer la force de serrage tout en ayant un nombre limité d'actions de verrouillage. Après avoir installé la cartouche CF et refermé le couvercle 10, il ne reste pour l'opérateur qu'à repousser quelques clips afin d'obtenir le verrouillage du boîtier 2.

Pour le déverrouillage ultérieur, la préhension des extrémités de certains clips peut être facilitée par une position haute et éventuellement décalée vers l'intérieur comme illustré par exemple pour un élément de verrouillage MV sur la figure 2, compatible avec un environnement encombré sur un côté au moins du boîtier 2.
Le col formant la sortie 4 peut aussi porter, par une douille visible en haut de la figure 2, un capteur de flux d'air tel qu'un débitmètre massique d'air (appelé MAF).

Il doit être évident pour les personnes versées dans l'art que la présente invention permet des modes de réalisation sous de nombreuses autres formes spécifiques sans l'éloigner du domaine d'application de l'invention comme revendiqué. Par exemple, bien que le recours à un espace intercalaire 13 pour éviter le contact entre les médias 5 et 6 a été choisi dans ce qui précède, des variantes peuvent prévoir (le cas échéant en configurant une partie d'un élément filtrant mobile ou déformable) d'obtenir un contact entre les médias 5, 6 de filtration.

Aussi, bien qu'un cycle incluant certaines étapes ait été décrit en lien avec des exemples illustrés, ceci n'exclut pas l'addition d'autres étapes, notamment en fonction des besoins de l'application visée. Par ailleurs, le cadre de support 7 a été illustré avec un périmètre rectangulaire mais, bien entendu, d'autres formes polygonales sont également utilisables, pour coopérer avec un boîter de format correspondant. Par ailleurs, la zone de collage peut présenter quelques variations dans la répartition du matériau ou dans sa forme finale. Le matériau M permettant la fixation peut correspondre à toute matière appropriée s'écoulant de façon fluide avant de pouvoir atteindre un état solide à des températures ordinaires de fonctionnement, en particulier à température ambiante.

## Revendications

1. Cartouche de filtration (CF) d'air pour filtre à air (1) disposant d'un boîtier (2) incluant une entrée (3) pour l'admission d'un flux d'air brut et une sortie (4) pour l'évacuation d'air purifié, la cartouche (CF) comprenant :
- un premier élément filtrant (11) ;
- un deuxième élément filtrant (12) ;
- un cadre (7) de support commun pour supporter le premier élément filtrant (11) et le deuxième élément filtrant (12) en les rendant solidaires l'un de l'autre, de sorte que le deuxième élément filtrant (12) est superposé au premier élément filtrant (11) pour permettre de former, dans le deuxième élément filtrant, au moins une couche de filtration intermédiaire entre une face de sortie (11a) du premier élément filtrant et la sortie (4) du boîtier (2) dans un état monté de la cartouche (CF) ;
**caractérisée en ce que** le cadre (7) s'étend de façon annulaire autour d'un axe longitudinal (X) en présentant une face intérieure (F7) depuis laquelle est formé un rebord (24) recouvert d'un matériau de collage (M), de sorte que le rebord (24) inclut une première surface (S1) de réception d'une couche de collage à base du matériau pour le premier élément filtrant (11) et une deuxième surface (S2) de réception d'une couche de collage du même matériau pour le deuxième élément filtrant (12), la deuxième surface (S2) étant orientée à l'opposé de la première surface (S1),
**et en ce que** la première surface (S1) de réception et la deuxième de surface (S2) de réception sont prévues, dans le rebord (24), sur une portion annulaire de paroi ajourée (24a) permettant une migration dudit matériau (M), fluide, sous l'effet de la gravité de l'une vers l'autre des surfaces (S1, S2) de réception, en remplissant des trous (O7) distribués dans la portion annulaire de paroi ajourée (24a).

2. Cartouche selon la revendication 1, dans laquelle le premier élément filtrant (11) présente un membre périphérique (21) annulaire de support et un premier média de filtration (5) qui est relié au membre périphérique (21), de préférence en étant fixé à une face intérieure du membre périphérique (21) ;
dans laquelle le deuxième élément filtrant (12) présente une ceinture (22) et un deuxième média de filtration (6) qui est relié à la ceinture (22), de préférence en étant fixé à une face intérieure de la ceinture (22) ;
et dans laquelle le membre périphérique (21) est noyé dans une première sous-couche du matériau longeant la première surface, tandis que la ceinture (22) est noyée dans une deuxième sous-couche du matériau longeant la deuxième surface, le remplissage desdits trous en matériau permettant de constituer une sous-couche intermédiaire discontinue reliant directement la première sous-couche à la deuxième sous-couche.

3. Cartouche selon la revendication 1 ou 2, dans laquelle le rebord (24) s'étend en saillie radialement vers l'intérieur et inclut un profil à section en T, de manière à délimiter, avec la face intérieure du cadre (7), une cavité inférieure (15) et une cavité supérieure (16), ce grâce à quoi le matériau de collage (M) peut remplir la cavité supérieure (15) et la cavité inférieure (16) par un écoulement réalisé depuis un seul côté du cadre.

4. Cartouche selon l'une quelconque des revendications précédentes, dans laquelle les trous (O7) sont réalisés sous forme de perforations oblongues.

5. Cartouche selon l'une quelconque des revendications précédentes, dans lequel le cadre (7) présente un relief externe (RS) circonférentiel, de préférence en saillie radialement sur l'extérieur du cadre (7), la cartouche incluant un joint d'étanchéité annulaire (J10) qui comprend :
- une première portion de recouvrement (25) du relief (RS) par le dessous ; et
- une deuxième portion de recouvrement (26) du relief (RS) par le dessus.

6. Cartouche selon la revendication 5, dans lequel le joint (J10) inclut une section transversale généralement en U, avec en outre deux lèvres d'étanchéité dont :
- une première lèvre (L1) annulaire qui se raccorde par le dessous à la première portion de recouvrement (25), en faisant saillie vers le bas et vers l'extérieur jusqu'à un bord libre de la première lèvre ; et
- une deuxième lèvre (L2) qui se raccorde par le dessus à la deuxième portion de recouvrement (26), en faisant saillie vers le haut et vers l'extérieur jusqu'à un bord libre de la deuxième lèvre.

7. Filtre à air, comprenant une partie filtrante, un boîtier (2) délimitant une chambre de filtration entre un composant (14) du boîtier et un couvercle, la partie filtrante étant montée amovible dans la chambre de filtration, en reposant par le dessus sur une zone de siège formée par bord intérieur du composant (14) qui inclut un fond (2a) du boîtier, le filtre étant **caractérisé en ce que** la partie filtrante inclut ladite cartouche filtrante selon l'une quelconque des revendications précédentes, le boîtier présentant en outre un couvercle (10) pour fermer une ouverture (O2) du composant (14) par laquelle au moins le premier élément filtrant (11) de la cartouche filtrante (CF) est placé dans ledit composant, en regard du fond (2a),
et dans lequel le composant (14) du boîtier inclut ladite entrée (3) pour l'admission de flux d'air brut, la sortie (4) pour l'évacuation d'air purifié étant prévue dans le couvercle (10), de façon à délimiter dans la dite chambre de filtration une zone en aval (Z2), entre le deuxième élément filtrant (12) superposé au premier élément filtrant et un dessus du couvercle (10) situé à l'opposé du fond (2a).

8. Filtre à air selon la revendication 7, dans lequel le couvercle (10) est articulé sur le composant (14) par une liaison à charnière (8) et apte à être fermé et verrouillé dans une position d'obturation de l'ouverture (O2), qui est une position dans laquelle des moyens de verrouillage (MV, MV') maintiennent un serrage entre le composant (14) et le couvercle (10) avec un écrasement d'un joint (J10) périphérique de la cartouche (CF) entre un épaulement ou gorge du composant (14) et une extrémité inférieure du couvercle (10).

9. Procédé d'assemblage d'une cartouche filtrante (CF) de purification d'air incluant deux éléments filtrants (11, 12), par utilisation d'un cadre (7) rigide, comprenant les étapes consistant essentiellement à :
- fournir le cadre (7) qui s'étend de façon annulaire autour d'un axe longitudinal (X) en présentant une face intérieure (F7) depuis laquelle est formé un rebord (24) accessible depuis deux extrémités axiales opposées du cadre (7), le rebord (24) étant formé dans une portion de paroi transversale ajourée (24a) présentant des trous ou fentes de passage (O7) ;
- encoller le rebord par un dépôt d'un matériau de collage, en utilisant une première ouverture prévue dans l'une des deux extrémités axiales, en déposant au moins une dose fluide de matériau de collage (M), de façon à distribuer une quantité du matériau de collage dont une partie sert à obtenir à température ambiante une couche solide dite supérieure le long d'un dessus du rebord ;
- laisser couler une excédent de matériau de collage encore fluide issu de ladite quantité, dans les trous ou fentes de passage (O7), afin de permettre un encollage distribué sur le dessus et le long d'un dessous dudit rebord (24), en limitant l'écoulement vers le bas du matériau de collage (M) par une contre-surface d'un outil disposée à l'aplomb du rebord dans une région annulaire sous-jacente au rebord, ce grâce à quoi le matériau de collage (M) peut aussi former une couche solide dite inférieure ;
- réaliser grâce audit matériau de collage (M) deux fixations sur ledit cadre (7), par mise en contact de chacun des deux éléments filtrants (11, 12) avec une couche correspondante choisie respectivement parmi la couche supérieure et la couche inférieure, en obtenant une première étanchéité annulaire (ZC1) cadre (7) - premier élément filtrant (11) et une deuxième étanchéité annulaire (ZC2) cadre (7) - deuxième élément filtrant (12).

10. Procédé d'assemblage selon la revendication 9, dans lequel, entre les deux fixations, le cadre (7) et l'outil sont écartés l'un de l'autre, la contre surface de l'outil restant en contact avec la couche inférieure dans un état encore fluide lors d'une première fixation prévue pour fixer l'un parmi les premier et deuxième éléments filtrants, une deuxième fixation étant prévue après un retournement du cadre (7) suivi d'un retrait de l'outil, afin de fixer l'autre parmi les premier et deuxième éléments filtrants et obtenir ainsi une configuration superposée du deuxième élément filtrant (12) et du premier élément filtrant (11) qui sont séparés par le rebord (24).
